# EUROPEAN PATENT SPECIFICATION

(11) **EP 3 686 704 B1**
(45) Date of publication and mention of the grant of the patent: **09.08.2023**
(21) Application number: 19152983.3
(22) Date of filing: 22.01.2019
(51) Int. Cl.: G05D 1/02, G05D 1/00

(54) **METHOD FOR GENERATING A REPRESENTATION AND SYSTEM FOR TEACHING AN AUTONOMOUS DEVICE OPERATING BASED ON SUCH REPRESENTATION**
VERFAHREN ZUM ERZEUGEN EINER DARSTELLUNG UND SYSTEM ZUM
EINLERNEN EINER AUTONOMEN VORRICHTUNG ZUM BETRIEB AUF DER
GRUNDLAGE DIESER DARSTELLUNG
PROCÉDÉ POUR GÉNÉRER UNE REPRÉSENTATION ET SYSTÈME D'ENSEIGNEMENT D'UN DISPOSITIF AUTONOME FONCTIONNANT SUR LA BASE D'UNE TELLE REPRÉSENTATION

(43) Date of publication of application: 29.07.2020
(73) Proprietor: Honda Research Institute Europe GmbH, 63073 Offenbach/Main (DE)
(72) Inventor: Einecke, Nils, 63073 Offenbach am Main (DE); Franzius, Mathias, 63073 Offenbach/Main (DE)
(74) Representative: Beder, Jens

(56) References cited:
- GB-A- 2 517 572
- US-A1- 2018 232 134
- US-B2- 10 159 180
- US-B2- 10 168 709

## Description

The invention regards a system for teaching an autonomous device, the autonomous device's operation being based on a representation, and a method for generating such representation.

Automated systems have become an integral part of modern society. For example, large parts of production rely on industrial robots. While these industrial robots typically operate based on a pre-programmed workflow in an automated manner, autonomous devices operate based on more complex rules and require less human defined input. Although first products of autonomous devices are on the market, for example autonomous lawnmowers or autonomous vacuum cleaners, still major problems need to be solved. One major challenge is to enable autonomous devices to safely and efficiently interact with their environment and, in particular, to interact with humans in a shared environment.

For example, a person will automatically avoid coming close to other humans when using a lawnmower for mowing the lawn. Contrary thereto, an autonomous device does not understand the concept of safe interaction with humans in its working environment by itself. Thus, it is necessary to make an autonomous lawnmower understand the concept of a garden and grass. One problem is that the exact working environment of the autonomous devices is often not known in advance. Thus, information on the environment cannot be completely pre-programmed. It is evident that the layout, shape and appearance of the garden strongly varies between different gardens and thus cannot be pre-programmed.

Known autonomous systems therefore define the work area of an autonomous lawnmower using an electromagnetic boundary wire, so that the autonomous device can recognize outer boundaries of its working area. Such electromagnetic boundary wire is only suitable for limiting a work area of the autonomous device. No further information on the environment of the autonomous device is conveyed to the device.

In this example, the invisible electric fence may indicate an outer boundary of the work area. In case that there is a walkway within the garden and the walkway is provided in the work area of the autonomous lawnmower defined by the boundary wire, the autonomous lawnmower may drive over the walkway with rotating blades.

Furthermore, in order to ensure safe operation of the autonomous lawnmower, it is necessary to make sure that people do not walk on the lawn while the autonomous lawnmower is active. It would be desirable if such an autonomous device had enough information by itself so that safe operation of the autonomous device does not lie within the responsibility of the people sharing the environment with the autonomous device.

Known systems often exclusively rely on the built-in capabilities of the autonomous device. For example, the system described in US 2017/0364088 A1 uses temporary markers that are easy to detect. The autonomous device learns the boundaries of the work area by storing locations of the detected markers. US 9,554,508 B2 and US 9,516,806 B2 describe alternatives, how an autonomous device such as a lawnmower can be trained in order to learn a boundary definition for the work area. All these state-of-the-art approaches have in common that the defined area does not have any meaning for the lawnmower except for separating the work area within the environment. As a consequence, the operation of the autonomous device cannot be adapted to specific aspects or characteristics of the work area and in particular not to different aspects within the entire work area. Defining an outer boundary of the work area only allows the autonomous device to stay within its work area during operation.

As mentioned above, known autonomous systems rely on capabilities provided by the autonomous device itself. These devices have a limited capability in obtaining information on the working environment by itself. This applies in particular because sensors that are mounted on an autonomous device have to be cheap because every sold autonomous device needs such integrated sensors. Products like autonomous lawnmowers are optimized for mass production. Expensive technology for obtaining information on the work environment shall therefore be avoided.

US 10,168,709 B2 discloses a method of operating a mobile robot. The method includes steps of generating a segmentation map defining respective regions of a surface based on occupancy data that is collected by a mobile robot responsive to navigation of the surface, of identifying sub-regions of at least one of the respective regions as non-clutter and clutter areas, and of computing a coverage pattern based on identification of the sub-regions. The coverage pattern indicates a sequence for navigation of the non-clutter and clutter areas, and is provided to the mobile robot. Responsive to the coverage pattern, the mobile robot sequentially navigates the non-clutter and clutter areas of the at least one of the respective regions of the surface in the sequence indicated by the coverage pattern. Related methods, computing devices, and computer program products are also discussed.

GB 2517572 A discloses a method for a working region acquisition of at least one working region of a robot, in particular of an autonomous lawnmower, by means of at least one capture unit and a generating unit. In a first method step, before a working operation of the robot, at least one visual media file of the at least one working region is captured by the at least one capture unit. In a second method step a map of the at least one working region is generated by the generating unit from the at least one visual media file. The visual media file may be captured independently of the robot and communicated electronically.

Thus, it would be desirable to improve a knowledge base on which an autonomous device is operated while at the same time the cost for manufacturing the autonomous device is kept low.

This objective is achieved by the inventive method for generating a representation based on which an autonomous device according to independent claim 1 operates and the corresponding system for teaching an autonomous device. Advantageous features and aspects of the invention are defined in the dependent claims.

It is to be noted that for understanding the invention and the state-of-the-art, an autonomous lawnmower is discussed as one possible implementation of an autonomous device. Autonomous lawnmowers are a prominent example for autonomous devices. Of course, all the aspects discussed with respect to an autonomous lawn mower apply in a corresponding manner to other autonomous devices. Examples for such autonomous devices are service robots, e.g. lawnmowers as mentioned above, or vacuum cleaners; industrial robots, e.g. transportation systems or welding robots; or autonomous vehicles, e.g. autonomous cars or drones. Generally, an autonomous device is a device that can at least partially operate on its own for at least a certain amount of time without human input or control.

According to the invention, a representation is generated and transmitted to an autonomous device. The autonomous device then operates in its work area based on this representation. The representation that is needed by the autonomous device in order to fulfill its working task is generated using a representation generating system. This representation generating system is separate from the autonomous device. The representation generating system is used for teaching or training the autonomous device. In the context of the present invention, teaching or training means that a representation of the work environment is generated and transmitted to the autonomous device. Using such a separate representation generating system has the great advantage that the technology used in the representation generation system can be reused after one autonomous device has been trained. Consequently, expensive technology and/or expensive sensors can be used in the representation generating system without adversely affecting the cost of the individual autonomous device. A training phase or teaching phase is typically much shorter than an operation phase of the autonomous device. After an autonomous device has been trained, the representation generating system can be used for training another autonomous device. Further, it is possible to concentrate on the human comprehensibility when designing the representation generating system, which means the system can present the teaching of the autonomous device in a way easy to observe and easy to understand by humans.

Finally, the training or teaching of the autonomous device can be done independently of the installation of the autonomous device. The autonomous device can be easily replaced without the requirement for a new teaching phase. The representation once generated can be used again for a new autonomous device because an autonomous device of the inventive system is designed to be provided with a representation generated externally.

The representation generating system at least comprises a mapping device, a map processing unit and a representation generating unit. First, the mapping device generates a map of the work environment including a work area in which the autonomous device shall be operated. Based on this map at least one area is defined by the map processing unit. Further, the type of this at least one area, time information and/or a working parameter for this at least one area is defined by labelling the at least one area by the map processing unit. It is evident that the number of areas that are defined in the map may vary and that it is not necessary to label each of the defined areas. Furthermore, the map processing unit may label the at least one area with one or with plural labels. The representation generating unit generates a representation of the work environment based on the at least one area including its labels. Finally, this representation is transmitted to the autonomous device, which is configured to operate based on this representation.

The at least one area is defined by an automated segmentation process that is run in the map processing unit. Using such automated segmentation process has particularly the advantage that the burden for a human who otherwise would need to define the areas in the map, is reduced. Alternatively or additionally, a human can input information to the representation generating system in order to define, delete and/or adapt areas in the map. It is particularly preferred that both approaches are combined. Thus, after running an automated segmentation algorithm, one or more humans can adapt the segmentation and thereby adapt the areas.

The automated segmentation process uses map data, for example land register data, a floor plan, a garden plan, a facade drawing, etc. as a basis for automated segmentation. The automated segmentation process may be a visual segmentation process, starting from image data and/or data acquired using laser scanners. The automated segmentation process may include 3D data segmentation. By automated segmentation processing on available data, in particular publicly available data, an efficient and smooth definition of areas in the map of the working environment is performed.

Similarly, the labels that are associated with the area(s) may result from an automated routine, which is performed based on data input like images, laser scans etc. Again, a single human or a plurality of humans may adapt the labels that are associated with the areas, delete or add them.

The labels identify categories that are relevant for the working operation of the autonomous device when the autonomous devices operates in the respective area.

The categories define types of areas which include at least one of "collaborative work area", "robot work area", "human only work area", "robot drive area", "robot access inhibited area", "water area", "grass area", '"walkway area", "paved area", "front yard area", "backyard area", "farmyard area", "leisure area", time information and/or working parameter(s). Labeling allows to distinguish at least between areas where unrestricted operation of the autonomous device shall be performed, where a restricted operation of the autonomous device shall be performed and areas where operation shall not be performed. Of course, additional labels may provide further information, thereby enabling more categories. Then, operation of the autonomous device with improved adaptability to specific areas in the work environment of the autonomous device becomes possible.

It may further be advantageous to divide areas into subareas, wherein different subareas of one common area are differently labeled. Defining subareas within one area has the advantage that different kinds of operation of the autonomous device can be realized. Up to now, autonomous devices only distinguish between work area and non-work area. Using again the example of the autonomous lawnmower, subareas can be used to adjust a height of the blades in different subareas differently. The heights are adjusted based on labels associated with respective subarea in the representation, wherein the labels define the work parameter "mowing height". Although the subareas are part of the work area in which the autonomous device is operated, the mower nevertheless has to distinguish between different subareas and to adapt its way of operation accordingly when it moves from one subarea to the other.

According to another preferred embodiment, after the representation of the work environment was generated for the first time, this representation is used as an intermediate representation that is not transmitted to the autonomous device but is visualized to at least one human. Feedback from the human is then received by an input/output device in order to refine the information associated with the defined areas by using labels. The refined information from the revision cycle then forms the basis for generating the final representation that is transmitted to the autonomous device. Refinement may regard either the segmentation of areas, the labelling of the areas or both. Of course, a plurality of intermediate representations may be generated and output so that a plurality of revision cycles may be performed. These intermediate representations may also be used as a representation that is transmitted to the autonomous device. This is particularly useful in case that the representation shall be improved by a large group of people that are asked to label the data, but operation of the autonomous device shall be enabled meanwhile.

Further, it is preferred that an updated representation is generated based on a newly generated map while maintaining the area's associated labels. Updating the representation allows an adaptation of the representation, namely the areas and/or the labels. Of course, it is possible to restart the entire process of mapping, defining areas in the map and generating the representation, but in many cases it is desirable to maintain a part of the information that has already been entered in an earlier representation. For example, if the work environment of the autonomous device changes significantly, the autonomous device may fail in self-localization. This could happen because of seasonal changes of the appearance of the environment. Then, the underlying map needs to be adapted, but the labels of the areas remain mostly stable.

On the other hand, use of certain areas may have changed. In that case, for example a new flower bed has been installed where previously was lawn, the labels need to be adapted. Besides changing of the labels, in this case it will also be necessary to redefine the areas because the new flower bed changes the working area, too.

Additionally or alternatively, the method may activate or deactivate at least one label associated to at least one area when a predetermined event occurs. A predetermined event may be that the current time is within a predetermined time range, for example between 10 pm and 4 am on a workday. During this time, a label "robot only work area" assigned to specific areas in the representation may be activated. A further predetermined event may be a detection of a human or an animal, which may activate the label "human work area" or deactivate the label "robot work area". The method enables operation of the autonomous device in a particularly advantageous manner with high spatial sensitivity for occurrence of certain events. Predetermined events may include detecting a person, an animal or an object in the environment of the autonomous device. Predetermined events may further include ambient conditions such as detecting rain, measuring a temperature within a certain temperature range or the measured temperature exceeding or dropping below a temperature threshold, determining a current time with respect to time periods, daytime, etc.

Generally, one or more sensor reading relating to the autonomous device or its environment may be used to define the predetermined event.

Additionally or alternatively, an ambient light level may be measured and used for defining the predetermined event, for example detecting day light or night. Additionally or alternatively, a state of the autonomous device may be determined and used for defining the predetermined event. For example, a battery charge level may be measured and used for defining the predetermined event.

The system for teaching an autonomous device, and in particular the representation generating system, comprises an augmented reality device, in particular an augmented reality wearable device, a smartphone or a tablet computer. When a smart phone or a tablet computer is used, it is also possible to generate the map by recording a trajectory of the autonomous device.

Augmented reality (AR) devices enable a human to perceive an environment, in the context of the present invention the working environment of the autonomous device, enriched with further information. Interaction with information that is displayed in a spatially referenced manner is improved. AR therefore provides a particularly advantageous way of presenting and manipulating areas and labels according to one aspect of the invention.

Embodiments and aspects of the present invention will now be explained with reference to the annexed drawings in which
- Figure 1: is a block diagram illustrating the main components of the inventive system;
- Figure 2: a simplified flowchart illustrating the main method steps of the inventive method; and
- Figure 3: an example of a situation during generation of the representation.

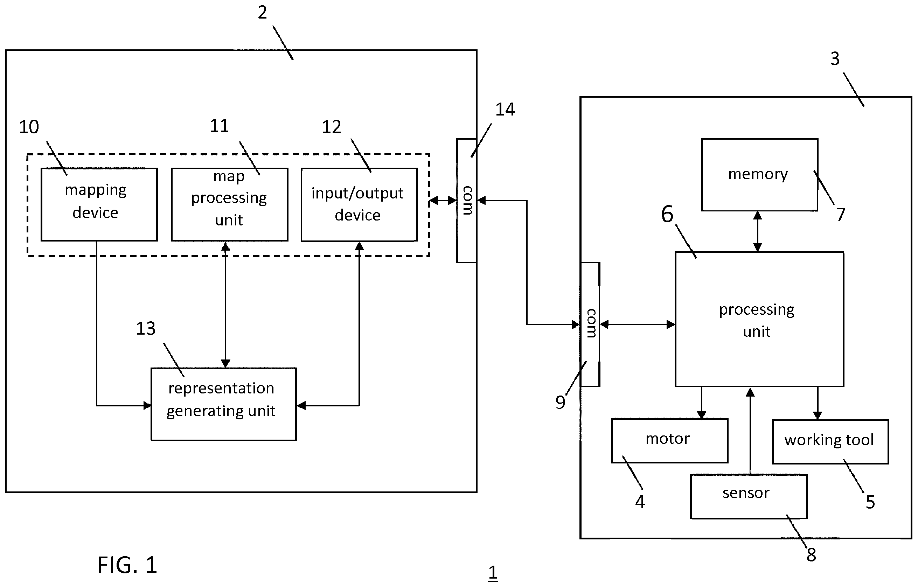

Figure 1 is a block diagram showing the main components of an inventive system 1 for teaching an autonomous device 3. The system 1 for teaching the autonomous device 3 comprises a representation generating system 2 and the autonomous device 3. The autonomous device 3 is adapted to fulfill a specific working task like mowing the lawn, cleaning, transporting, etc. autonomously. The autonomous device 3 may be for example an autonomous lawnmower equipped with at least one motor 4 that drives wheels, which are not shown in the drawing.

Still referring to an autonomous lawnmower as an autonomous device 3, the autonomous device 3 is furthermore equipped with a working tool 5 including blades and a mechanism so that the blades can be driven or stopped. Furthermore, the height of such blades is adjustable. The operation of the motor 4 and the working tool 5 is controlled by a processing unit 6, which may comprise either a single processor or a plurality of processors. The processing unit 6 is connected to a memory 7 in which algorithms for controlling the motor 4 and the working tool 5 are stored. The memory 7 furthermore stores a representation of the work environment of the autonomous device 3. The working tool 5 is controlled based on the stored representation, too.

Additionally, the autonomous device 3 comprises at least one sensor 8, at least for performing self-localization. As it has been explained above, there are basically two approaches known in the art for teaching an autonomous device about its work environment. According to the first approach, a change or adaptation of the environment is made such that it fits some assumptions used when programming the system. For example, in industrial scenarios the working space is restructured. In case of autonomous lawnmowers an additional boundary wire needs to be laid out. The second approach is a manual teach-in of the autonomous device which means that the autonomous device is moved manually and at the same time the autonomous device records its state. Afterwards, the autonomous device computes an allowed state space or a work area from this. For example, the end effector of an industrial robot is moved by hand in its operational range (operational volume) or an autonomous lawnmower is moved using a remote-control around the perimeter of the garden.

According to the invention, the teach-in is not directly performed using the autonomous device, but using a representation generating system 2 which generates the representation and finally transmits the representation to the autonomous device 3. The autonomous device 3 stores the received representation in the memory 7.

The representation generating system 2 comprises a map generating unit 10 (mapping device), a map processing unit 11, an input/output device 12 and the representation generating unit 13. It is to be noted that the map generating unit 10, map processing unit 11 and representation generating unit 13 must be understood as functional units and may be realized in software that runs on a processor. Further, these units may be integrated in one single device or may be distributed over a plurality of connected devices.

At first, using the map generating unit 10, a map is generated which means that information on the environment, in which the autonomous device 3 shall be operated, is gathered. This can be done using a laser scanner, any type of camera, an augmented reality device, a virtual reality device, a smart phone, a tablet, a satellite navigation technique such as Real-Time Kinematic Positioning (RTK-GPS), or a human pose estimation technique.

The technical means for obtaining the information on the environment may form part of the representation generating device 2. Additionally or alternatively, data for generating the map may be acquired via external technical means such as sensors, for example cameras, arranged externally to the representation generating device 2.

The information on the work environment may include map data, for example publicly available land register data, a floor plan, a garden plan, a façade drawing, etc. for generating the map as the basis for automated segmentation.

Map data may comprise map content such as environment structures in the working environment, for example 2D or 3D environment structures. The map generating unit 10 may generate 2D or 3D environment structures as a 2D or 3D model by processes such as Structure from Motion (SfM).

The map content may include area definitions, for example based on satellite navigation traces such as GNSS traces in 2D or 3D.

The map content may include landmarks, for example visual landmarks or laser point structures. The map content may include landmarks referring to a base station and/or a charging station of the autonomous device 3.

Once such a map as a basis for the further method steps is generated, the map is segmented in the map processing unit 11. Preferably, augmented reality (AR) is used in order to conduct or at least assist the segmentation process. Augmented reality enables humans to see an environment enriched with additional information.

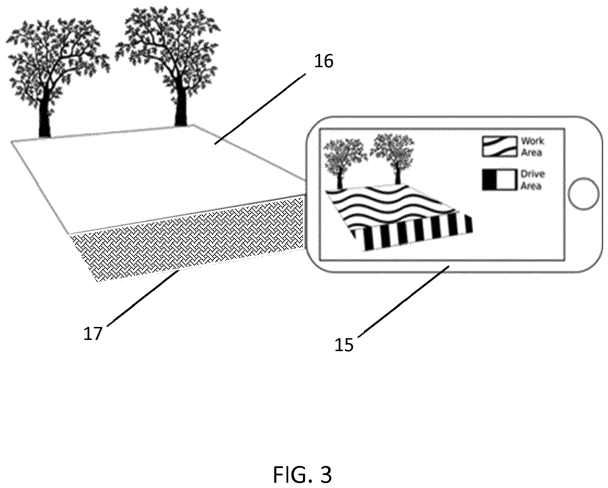

Additional information may for example come from other sensors like laser scanners. Augmented reality is realized using augmented reality devices (AR devices). Examples of AR devices include AR wearable devices (AR wearables) such as head wearables in guise of glasses or helmets, or AR devices realized using a smart phone or a tablet computer (tablet). An example with a smart phone 15 is shown in figure 3 and explained below.

Using augmented reality for associating labels to areas is in particular advantageous because a human using the augmented reality is able to associate labels with areas at the actual position of the autonomous device 3 in the work environment and looking at the area in the work environment. This is possible as different areas are shown in form of an overlay to the work environment as perceived by the human, the overlay allowing to distinguish different areas. A human easily detects errors and misconceptions in the presentation using augmented reality. Furthermore, augmented reality enables to modify or extend the representation, the areas and/or labels after having generated an initial representation. Augmented reality enables to perceive a current state easily when displaying the initial presentation as an overlay showing the areas over a presentation of the current state (real world).

As explained above, the teaching of areas to the autonomous device 3 is achieved by generating the representation of the work environment first and providing it to the autonomous device 3 thereafter. An "area" in the context of the present application may be a 2D area or a 3D volume.

Defining one or more areas in the map by segmentation can be implemented in various ways.

For example, touch gestures on a screen of a smart phone 15 or tablet computer can be used in order to define a polygon enclosing the area to be defined. Such a polygon consists of a set of points. The polygon may be defined by inserting points in the map. Additionally or alternatively, the polygon may be input by defining at least one of lines, surfaces or volumes. Between the points of the set of points, a line or surface is drawn for visualizing the area border, for example in a fully automated manner.

Defining the areas may include manipulation of the polygon by operational inputs such as moving, rotating, scaling and/or resizing an already defined polygon, for example using specific predetermined gestures known in the art of touch input devices or operational inputs via pointing gestures by the human user which are recognized by cameras.

In order to enable a person to define an area in the map as explained above, the input/output device 12 is used. The input/output device 12 receives map information from the map processing unit 11 and visualizes the map including already defined areas. An example for such visualization is shown on the smart phone's display in figure 3.

Alternatively, the segmentation can be performed automatically. The map data is automatically categorized and segmented using a segmentation algorithm. Automated segmentation processes can use deep learning methods like convolution networks for a semantic segmentation of visual data. Such automated segmentation process is known for example from Jonathan Long, Evan Shelhamer and Trevor Darrel, "Fully Convolution Networks for a Semantic Segmentation", in: The IEEE Conference on Computer Vision and Pattern Recognition CVPR 2015, pp. 3431-3440, which provides in sections 3 and 4 an example of applying deep learning methods for segmenting map data suitable for being implemented in the representation generating unit 13.

When a smart phone 15 or a tablet computer is used, areas can be defined by processes similar to applying photo editing software with a so-called "magic wand" or a grab cut functions. Such automated segmentation process is known for example from Carsten Rother, Vladimir Kolmogorov and Andrew Blake: "GrabCut - Interactive Foreground Extraction using iterated Graph Cuts", in: ACM Transactions on Graphics (TOG) 2004, Volume 23, Issue 3, August 2004, pp. 309-314, which provides in particular in sections 2 and 3 an example of an algorithm and its application for segmenting still images in the representation generating unit 13.

Such semi-automated processes use a user input for marking (annotating) some part of an acquired image as belonging to the area and then the segmentation algorithm proposes a segmentation for the area over the entire image. The segmentation algorithm and the annotator may work in an iterative fashion. In this case, the annotator marks wrongly segmented areas as belonging or not belonging to the area and the algorithm adapts its segmentation model accordingly.

When AR devices are used, 3D points can be defined directly to form a 3D polygon, for example, similar to a mesh in 3D space. The 3D points can be added, moved and deleted by a gesture recognition system of the AR device. The virtual points can be grasped and moved by the user of the AR device. For actual 2D area definition, the 3D points could snap to the ground using a function provided by AR devices.

The segmentation process that is done by the map processing unit 11 can be performed on site. A human or a robot may move along an outer border of an area, for example a work area, with a GPS or differential GPS equipped device. The GPS or differential GPS equipped device records a set of positions (waypoints) while the human or robot is moving. The recorded set of positions defines a polygon in the map defining an area, in particular the work area in our example.

Area definitions generated exclusively using navigation satellite systems such as GPS may be inaccurate, for example, in a garden environment with buildings nearby. GPS tracks consisting of a set of positions may define an initial area definition during the segmentation. The initial area definition is then refined in further runs of the segmentation process using alternate methods. For example, a human operator or other means may refine and adapt the initial area definition, for example using the AR device.

The segmentation process which is done by the map processing unit 11 can also be executed off-line or off-site for example using cloud computing or on a personal computer. For example, the underlying map can be generated using a drone equipped with a camera capturing aerial views of the work environment. The aerial views can then be segmented after they have been transferred to a personal computer implementing the representation generating unit 13. Additionally or alternatively, laser scanners can capture a 3D model of an environment, which can then be segmented.

The map may include further elements such as one or more landmarks, base stations, charging stations, etc. The landmark, base station and charging station enable the autonomous device 3 to localize itself with reference to the map data and the defined area representation. The landmarks and the base station may be defined as areas with a small size or no size at all (size zero).

The map may also include 3D or 2D elements such as GPS traces. These 3D or 2D elements provide a localization capability for the autonomous device 3.

One area, a plurality of the areas or all of the areas that are defined in the map, are then labelled, thereby indicating a type of the area. Labelling means associating at least one label or a combination of labels to an area. The representation generating unit 13 may perform labelling directly when the definition of an area is generated or at a later point in time. It is most preferred to use augmented reality of augmented reality devices visualizing the map and including the already defined areas when additional information in form of labels is added to the areas. The labels add semantic meaning and additional information to the areas. The label (also: tag or semantic label) relates to a meaning in language suggesting a meaning apart from the element the term actually describes.

Typical examples for tags associated with an area in the environment of the autonomous device (robot) are for example:
- "collaborative work area", which denotes an area where both, humans and the robot(s) (collaborative robot, abbreviated "cobot") may roam and thus the robot may work under restrictions with respect to at least one of speed, force or actual sensor equipment of the autonomous device, etc. in order to ensure that operation of the autonomous device under no circumstances endangers a human;
- "robot work area", which denotes an area where no humans roam and thus the autonomous device can work with full speed, force and independent from its sensor equipment as there is no human within this area;
- "human only work area", which denotes an area where humans may roam and the autonomous device is prohibited from working, but the autonomous device may transfer through this area, possibly with reduced speed or emitting visually or acoustically perceivable warning signals;
- "robot drive area", which denotes an area where the autonomous device may drive, but the autonomous device is prohibited to operate its working tools;
- "robot access inhibited area", which denotes an area where the autonomous device is prohibited to enter.

Other labels may refer to particular types or categories of surfaces in the respectively labelled areas, for example "water area", "grass area", "walkway area", "paved area".

Further labels may refer to specific functions of the areas, for example "front yard area", "backyard area", "farm yard area", "leisure area".

For example, a 2D area for an autonomous lawnmower as a specific embodiment of the autonomous device 3 might be the grass area in a garden. A 3D area might be a robot work area for an industrial production robot, which means an area or actually a 3D space (volume) where no humans roam and thus, the industrial production robot can work with full speed and force without endangering a human. Possibly, only certain types of robots may actually be allowed (for example certified) to work in a collaborative area together with human coworkers. These robots, sometimes referred to as cobots, include programming and sensors which enable them to stop in case a contact with a human in the collaborative area is imminent or actually happening.

Adding semantic information by associating labels with the areas allows a much more flexible usage of the autonomous device 3 in the areas by controlling the autonomous device 3 based on the representation. Contrary to the prior art solutions, which only distinguish between a work area and an area outside the work area, the autonomous device 3 according to the invention and using the representation indicating areas associated with labels may adapt its behavior within a particular area according to an associated label or combination of labels.

For example, an autonomous lawnmower may operate based on a received representation, which teaches the autonomous lawnmower one grass area, one walkway area, one pool area, one backyard area and one front yard area. The control system of the autonomous lawnmower is programmed to use the information on the type of the area to devise a meaningful behavior. Furthermore, areas can be given implicit or explicit further information like "dangerous for the autonomous system", for example "water in a pond", or "human only area". This further information (semantic information) may mean that the autonomous device 3 should not go over these areas, or these areas are work areas for the autonomous device 3, or are drive areas. Drive areas (drivable areas) mean for example that an autonomous lawnmower can only drive with reduced speed and its mowing blades switched off over these areas labelled "drive areas". Robot work areas are areas in which the autonomous lawn mower may mow.

The additional information that is associated with areas by using labels can be any kind of information that influences the behavior of the autonomous device 3. For example, the additional information may comprise information on terrain types, information about the presence of humans or other autonomous devices, work parameters (e.g. favorable grass height in case of an autonomous lawnmower; maximum speed or force in case of an industrial robot), hazards (water, heat, electricity, etc.), or time information.

Time is a special case of additional information in the sense that it can define when a certain label which describes a property or semantics of the area is active. For example, the backyard in an autonomous lawnmower scenario might be a robot work area during night hours and a human-only-area during daylight hours. In case of an industrial robot, a certain 3D area might be a collaborative work area for a first work shift but a human only work area or robot work area in a second work shift. The map processing unit 11 may use additional information in order to label the areas, for example information received by the map processing unit 11 using the input/output device 12. The input/output device 12 may visualize the map, generated areas in the map and possibly labels that are already defined in the map. A human, for example a service person commissioning the system 1, may then input information via the input/output device 12. The information input by the human is transferred from the input/output unit 12 to the map processing unit 11. In the map processing unit 11 the received information is processed and a corresponding label is associated with the respective area based on the received and processed information.

Once the map processing unit 11 has performed labeling, the representation which forms the basis for operation of the autonomous device 3 is generated in the representation generating unit 13 and transmitted to the autonomous device 3. In order to transmit the final representation to the autonomous device 3, the representation generating system 2 comprises a communication unit 14 connected to the representation generating unit 13. In a simple case, the presentation comprises information on the segmented areas, polygon points of the areas and the associated labels, which are transmitted to the autonomous device 3.

In case of an AR device which typically has an integrated position estimation and tracking system, it is necessary to transform the position data of the polygon points generated using the augmented reality device into a coordinate system of the autonomous device 3.

The communication unit 14 of the representation generating system 2 communicates with a further communication unit 9 arranged in the autonomous device 3. Communication unit 14 and further communication unit 9 may perform data exchange via at least one wired or wireless communication channel, for example via a data cable, or using a wireless communication protocol such as a wireless personal area communication WPAN, for example, according to any standard of IEEE 802.15, Bluetooth^{™}, a wireless local area network WLAN, for example according to any standard of IEEE 802.11, a cellular wireless standard, etc.

The AR device for displaying an (intermediate) representation and for receiving information input by the user may be the input/output device 12 or be part of it.

It is to be noted that the discussion of the inventive method and inventive system 1 mainly focuses on polygon points or meshes as area representation, but other representations are possible as well. For example, the representation may use grids, voxels, triangular meshes, satellite navigation system positions (e. g. GPS positions), map data, learned or trained models and neural networks.

The generated representation is an abstraction of the defined areas and is not defined in a state space of the particular autonomous device 3. Consequently, the generated representation may be transferred to a plurality of different autonomous devices 3. This enables replacement of the autonomous device 3 by another autonomous device 3 without requiring execution of a new training phase for the other autonomous device 3.

The representation transmitted to the autonomous device 3 may contain further data than just labelled areas. The representation transmitted to the autonomous device 3 may additionally contain sensor information referenced to the map representation, e.g., visual feature descriptors, for the self-localization of the autonomous device 3. The sensor information such as visual feature descriptors or landmarks enables the autonomous device 3 to localize itself with reference to the areas.

Further, it is possible to transfer the representation also to other devices and apparatuses. The representation may be transferred for example to the smart phone 15 as explained above. Since the smart phone 15 of the system's user may be integrated in the representation generating system 2, the user may use the smart phone 15 to further enhance the representation by adding, deleting or changing labels to existing areas and/or delete, generate or adapt (tailor) areas according to his specific requirements. The adapted representation may then be transmitted to the autonomous device 3 via the communication unit 14. Thus, it is easily possible to adapt an existing representation in order to react to changes in the work environment of the autonomous device 3.

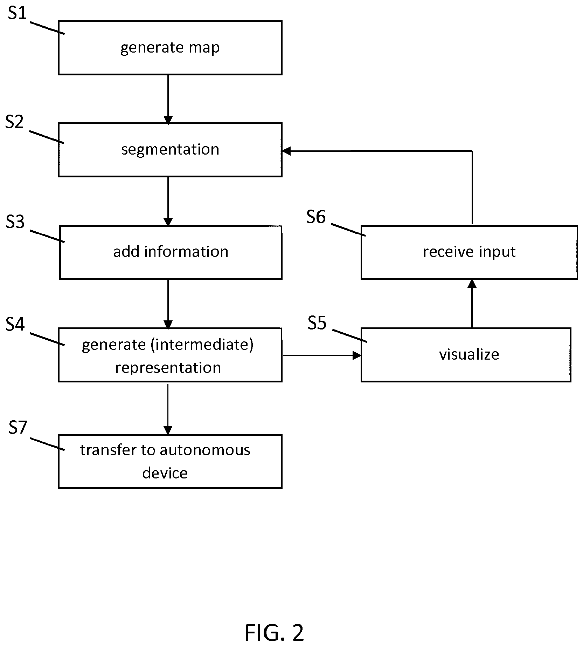

Figure 2 is a flowchart illustrating the major method steps that have been explained above already in more detail.

When the autonomous device 3 shall be trained in order to be able to work in a specific work area of a work environment, initially a map of the working environment is generated (or obtained) in step S1.

In a subsequent step S2, the segmentation is performed based on the map generated or obtained in step S1. In the segmentation process, one or a plurality of areas are defined in the generated map.

Once an area or a plurality of areas is defined, (semantic) labels are added in step S3 by associating labels to the areas defined in the generated map. These associated labels correspond to corresponding types of the areas. It is to be noted that "type" may contain any information that may be used for causing an adaption of the behavior of the autonomous device 3.

Once the map is segmented and thus the areas are defined and additional information in form of labels is associated with the respective areas, a representation of the work environment is generated in step S4. It is to be noted that this representation may be the representation that is transferred to the autonomous device 3 in step S7. Alternatively, this representation may be an intermediate representation which is visualized by the input/output device 12 in step S5, for using an augmented reality device so that a human may delete, adapt or add areas and/or information to the intermediate representation. In step S6, an input is received from the human that modifies the generated and visualized intermediate representation. The method then proceeds with steps S2, S3 and S4.

The method may run the iteration loop of steps S2, S3, S4, S5 and S6 repeatedly until a final representation of the work environment for transfer to the autonomous device 3 is created.

A human operator may decide if the definition of areas is finished, and the generated representation may be transferred to the autonomous device 3 as the final representation, e.g., if to proceed from step S4 to step S7 or, alternatively, to repeat the iteration loop of steps S2, S3, S4, S5 and S6 with the intermediate representation.

It is to be noted that generating, deleting or amending areas may also refer to generating, deleting or amending subareas. Such subareas can be included in an area so that a plurality of subareas together form the entire or at least a portion of a larger area. A label associated with the larger area is valid also for the subareas, but the subareas may be additionally labelled with further additional information. For example, an entire work area of an autonomous lawnmower may comprise as separate subareas a front yard zone and a backyard zone. These subareas may be differently labelled in order to cause a behavior of the autonomous lawnmower to be different in the subareas. Such different labels may be used by the autonomous device 3 to define different timings of the operation of the autonomous device in the different subareas.

Preferably, augmented reality is used as a key technology in the inventive system 1. The respective example is illustrated in figure 3. As it is shown in figure 3, the user can see an overlay of the area information with an image of the real world, which tremendously improves the human comprehensibility of the representation of the areas. In the example illustrated in figure 3, a smart phone 15 is used to visualize the representation. Visualizing here means that the representation that is finally transferred to the autonomous device 3 is merged with an image of the work environment. Here an image of the work environment, a garden, is captured by a built in camera of the smart phone 15. The real world shows a garden area with a grass field 16, two trees and a walkway 17. The overlay is made using a semi-transparent pattern on a screen of the smart phone 15 in order to visualize areas that already have been defined as "robot work area" and "robot drive area". Due to his natural perception of the defined areas in the image of the work environment, a user can easily understand the defined areas. Thus, by using the touchscreen of the smart phone 15, he may easily define, delete or modify the areas (and/or subareas) and also easily label them with additional information. Labelling areas with additional information may be guided by a graphical user interface (GUI) displaying a representation of available options on the screen of the smart phone 15, for example suggesting available labels that could be associated with a selected area.

While the above given explanations are all directed to a single human inputting either information for segmenting and thus defining areas in the map, or inputting additional information used for labelling the areas, it is evident that information may also be gathered from a large group of humans. In order to enable a large amount of people to input information regarding the label(s) and/or the area(s), a representation may be distributed to a plurality of input/output devices 12. The distributed representation may be an intermediate representation or a representation that was already transmitted to the autonomous device 3. Then, in a corresponding manner as explained above referring to a single user, a plurality of people having access to the distributed representations may all input their respective annotations (additional information) and/or adapt the areas in the representation. After collecting and combining the annotated representations from the plurality of people, it can then be judged by the representation generating system 2 which information shall be used for generating the combined representation finally. This can be done for example by averaging the input information, rejecting implausible labels, merging of labels or refining labels. In such a case 2D editing on a computer or 3D editing in a virtual reality is more feasible, as humans acting as annotators may be distributed over larger parts of the world. However, this technique can be combined with any of the aforementioned processes either as initialization or post-processing refinement.

The invention is particularly suited for application with autonomous devices such as autonomous lawn mowers, autonomous vacuum cleaners, and window cleaning robots which were used as examples in the description of embodiments of the invention.

Further examples of autonomous devices for applying the invention include industrial robots, for example welding robots. Drones or autonomous land, sea or air vehicles are other examples for autonomous devices for the invention which is defined in the appended claims.

## Claims

1. Method for generating a representation based on which an autonomous device (3) operates in its working environment, the method executed in a representation generating system (2) including a mapping device (10), a map processing unit (11), and a representation generating unit (13), wherein the representation generating system (2) is separate from the autonomous device (3), the method comprising the following steps:
generating a map (S1) of the working environment of the autonomous device (3) by the mapping device (10);
defining at least one area (S2) in the map and associating at least one label (S3) with each area to define the area's type, time information and/or a working parameter by the map processing unit (11);
generating a representation (S4) of the working environment based on the at least one area and its associated label(s) by the representation generating unit (13); and
transmitting the representation (S7) to the autonomous device (3),
**characterized by**
that the representation generating system (2) comprises means for obtaining information on the working environment for generating the map, wherein the means for obtaining information on the working environment includes at least an augmented reality device for displaying the representation using a semi-transparent pattern on a screen of the augmented reality device as an overlay to an image of the work environment as perceived by a human, captured by a camera of the augmented reality device, and displayed on the screen of the augmented reality device. , and the method further comprising a step of running, by the map processing unit (11), an automated segmentation process on the generated map for defining the at least one area in the map and using map data that comprises publicly available data or publicly available land register data.

2. Method according to claim 1,
**characterized in that**
the map processing unit (11) receives a human input (S6) to define and/or adapt an area.

3. Method according to claim 1 or 2,
**characterized in that**
an input is received (S6) by the map processing unit (11) indicating an area's type and the map processing unit (11) associates a label corresponding to the type with the respective area.

4. Method according to any one of claims 1 to 3,
**characterized in that**
the labels correspond to at least the following types of areas: "collaborative work area", "robot work area", "human only work area", "robot drive area", "robot access inhibited area", "water area", "grass area", "walkway area", "paved area", "front yard area", "backyard area", "farmyard area", "leisure area", time information and/or a working parameter.

5. Method according to any one of claims 1 to 4,
**characterized in that**
areas are divided (S2) into subareas, wherein different subareas of a common area are differently labelled.

6. Method according to any one of claims 1 to 5,
**characterized in that**
for generating the representation an intermediate representation is visualized (S5) to at least one human and feedback is received (S6) and used to adapt, delete and/or generate label(s).

7. Method according to any one of claims 1 to 6,
**characterized in that**
for generating the representation an intermediate representation is visualized (S5) to at least one human and feedback is received and used to adapt, delete and/or generate area(s) of the intermediate representation.

8. Method according to any one of claims 1 to 7,
**characterized in that**
an updated representation is generated based on a newly generated map while maintaining the areas labels or based on adapted labels while maintaining the areas.

9. Method according to any one of claims 1 to 8,
**characterized in that**
at least one label associated to at least one area is activated or deactivated when a predetermined event occurs.

10. Method according to any one of claims 1 to 9,
**characterized in that**
areas and/or subareas are represented based on polygon points, meshes, grids, voxels, triangular meshes, GPS positions, map data, learned or trained model, or neural networks.

11. System for teaching an autonomous device comprising
an autonomous device (3) and a representation generating system (2) for generating a representation of a working environment of the autonomous device (3),
the representation generating system (2) comprising
a mapping device (10) for generating a map of the working environment,
a map processing unit (11) for defining at least one area in the map and for associating at least one label with at least one of the areas to define an area's type, time information and/or a working parameter, and
a communication unit (14) for transmitting the representation to the autonomous device (3), and
**characterized in**
**that** the representation generating system (2) comprises means for obtaining information on the working environment for generating the map, wherein the means for obtaining information on the working environment includes an augmented reality device for displaying the representation using a semi-transparent pattern on a screen of the augmented reality device.as an overlay to an image of the work environment as perceived by a human, captured by a camera of the augmented reality device, and displayed on the screen of the augmented reality device, and
**that** the map processing unit (11) is configured to run an automated segmentation process on the generated map for defining the at least one area in the map and using map data that comprises publicly available data or publicly available land register data.

12. System for teaching an autonomous device according to claim 11,
**characterized in that**
the representation generating system (2) comprises an input/output device (12) for outputting the map and/or an intermediate representation and for receiving a human input, wherein the input/output device (12) is connected at least to the map processing unit (11).

13. System for teaching an autonomous device according to any one of claims 11 to 12,
**characterized in that**
the map processing unit (11) is configured to adapt, delete and/or generate areas based on received human feedback.

14. System for teaching an autonomous device according to any one of claims 11 to 13,
**characterized in that**
the map processing unit (11) is configured to adapt and/or delete associated labels and/or generate new labels based on received human feedback.

15. System for teaching an autonomous device according to any one of claims 11 to 14,
**characterized in that**
the representation generating unit (13) is configured to generate an intermediate representation and forward such intermediate representation to the input/output device (12).

16. System for teaching an autonomous device according to any one of claims 11 to 15,
**characterized in that**
the map processing unit (11) is configured to combine a new map with existing areas and their labels.

17. System for teaching an autonomous device according to any one of claims 11 to 16,
**characterized in that**
the autonomous device (3) is an autonomous lawnmower, a vacuum cleaner, an industrial robot, a welding robot, a drone or an autonomous vehicle.

18. System for teaching an autonomous device according to any one of claims 11 to 17,
**characterized in that**
the representation generating system (2) comprises an augmented reality wearable device, a smartphone (15) or a tablet computer.

## Patentansprüche

1. Verfahren zum Erzeugen einer Darstellung, auf deren Grundlage eine autonome Vorrichtung (3) in ihrer Arbeitsumgebung arbeitet, wobei die Ausführung des Verfahrens in einem Darstellungserzeugungssystem (2) erfolgt, welches eine Kartierungsvorrichtung (10), eine Kartenverarbeitungseinheit (11) und eine Darstellungserzeugungseinheit (13) enthält, wobei das Darstellungserzeugungssystem (2) von der autonomen Vorrichtung (3) getrennt ist, wobei das Verfahren die folgenden Schritte aufweist:
Erzeugen einer Karte (S1) der Arbeitsumgebung der autonomen Vorrichtung (3) durch die Kartierungsvorrichtung (10);
Definieren zumindest eines Bereichs (S2) in der Karte und Zuordnen zumindest einer Kennzeichnung (S3) zu jedem Bereich, um durch die Kartenverarbeitungseinheit (11) den Typ des Bereichs, Zeitinformationen und/oder einen Arbeitsparameter zu definieren;
Erzeugen einer Darstellung (S4) der Arbeitsumgebung auf der Grundlage des zumindest einen Bereichs und seiner zugehörigen Kennzeichnung(en) durch die Darstellungserzeugungseinheit (13); und
Übermitteln der Darstellung (S7) an die autonome Vorrichtung (3),
**dadurch gekennzeichnet**
**dass** das Darstellungserzeugungssystem (2), um die Karte zu erzeugen, eine Einrichtung zum Erhalten von Informationen über die Arbeitsumgebung aufweist, wobei die Einrichtung zum Erhalten von Informationen über die Arbeitsumgebung zumindest eine Augmented-Reality-Vorrichtung enthält, um die Darstellung, unter Verwendung eines halbtransparenten Musters auf einem Bildschirm der Augmented-Reality-Vorrichtung, in einer dem Bild der Arbeitsumgebung, wie sie von einem Menschen wahrgenommen und von einer Kamera der Augmented-Reality-Vorrichtung erfasst und auf dem Bildschirm der Augmented-Reality-Vorrichtung angezeigt wird, überlagerten Form anzuzeigen, wobei das Verfahren ferner folgenden Schritt aufweist:
Ausführen eines automatisierten Segmentierungsprozesses auf der erzeugten Karte durch die Kartenverarbeitungseinheit (11) zum Definieren des zumindest einen Bereichs in der Karte und unter Verwendung öffentlich verfügbare Daten oder öffentlich verfügbare Grundbuchdaten aufweisender Kartendaten.

2. Verfahren nach Anspruch 1,
**dadurch gekennzeichnet, dass**
die Kartenverarbeitungseinheit (11) eine manuelle Eingabe (S6) erhält, um einen Bereich zu definieren und/oder anzupassen.

3. Verfahren nach Anspruch 1 oder 2,
**dadurch gekennzeichnet, dass**
von der Kartenverarbeitungseinheit (11) eine den Typ eines Bereichs angebende Eingabe erhalten wird (S6), wobei die Kartenverarbeitungseinheit (11) eine dem Typ entsprechende Kennzeichnung dem jeweiligen Bereich zuordnet.

4. Verfahren nach einem der Ansprüche 1 bis 3,
**dadurch gekennzeichnet, dass**
die Kennzeichnungen zumindest den folgenden Bereichs-Typen entsprechen: "gemeinschaftlicher Arbeitsbereich", "Roboter-Arbeitsbereich", "Nur-Mensch-Arbeitsbereich", "Roboter-Fahrbereich", "Roboter-Zugangs-Sperrbereich", "Wasserbereich", "Grasbereich", "Gehwegbereich", "gepflasterter Bereich", "Vorgartenbereich", "Hinterhofbereich", "Hofbereich", "Freizeitbereich", Zeitangaben und/oder einem Arbeitsparameter.

5. Verfahren nach einem der Ansprüche 1 bis 4,
**dadurch gekennzeichnet, dass**
Bereiche in Teilbereiche unterteilt werden (S2), wobei verschiedene Teilbereiche eines gemeinsamen Bereichs unterschiedlich gekennzeichnet werden.

6. Verfahren nach einem der Ansprüche 1 bis 5,
**dadurch gekennzeichnet, dass**
zur Erzeugung der Darstellung zumindest einem Menschen eine Zwischendarstellung visualisiert wird (S5) und eine Rückmeldung erhalten (S6) wird und zur Anpassung, Löschung und/oder Erzeugung von Kennzeichnung(en) verwendet wird.

7. Verfahren nach einem der Ansprüche 1 bis 6,
**dadurch gekennzeichnet, dass**
zur Erzeugung der Darstellung zumindest einem Menschen eine Zwischendarstellung visualisiert wird (S5) und eine Rückmeldung erhalten wird und zur Anpassung, Löschung und/oder Erzeugung von Bereich(en) der Zwischendarstellung verwendet wird.

8. Verfahren nach einem der Ansprüche 1 bis 7,
**dadurch gekennzeichnet, dass**
eine aktualisierte Darstellung auf der Grundlage einer neu erzeugten Karte unter Beibehaltung der Bereichs-Kennzeichnungen oder auf der Grundlage angepasster Kennzeichnungen unter Beibehaltung der Bereiche erzeugt wird.

9. Verfahren nach einem der Ansprüche 1 bis 8,
**dadurch gekennzeichnet, dass**
zumindest eine mindestens einem Bereich zugeordnete Kennzeichnung aktiviert oder deaktiviert wird, wenn ein vorbestimmtes Ereignis eintritt.

10. Verfahren nach einem der Ansprüche 1 bis 9,
**dadurch gekennzeichnet, dass**
Bereiche und/oder Teilbereiche auf der Basis von Polygonpunkten, Maschen, Gittern, Voxeln, Dreiecksnetzen, GPS-Positionen, Kartendaten, gelernten oder trainierten Modellen oder neuronalen Netzen dargestellt werden.

11. System zum Trainieren einer autonomen Vorrichtung, aufweisend
eine autonome Vorrichtung (3) und ein Darstellungserzeugungssystem (2) zum Erzeugen einer Darstellung einer Arbeitsumgebung der autonomen Vorrichtung (3),
wobei das Darstellungserzeugungssystem (2) aufweist:
eine Kartierungsvorrichtung (10) zum Erzeugen einer Karte der Arbeitsumgebung,
eine Kartenverarbeitungseinheit (11) zum Definieren zumindest eines Bereichs in der Karte und zum Zuordnen zumindest einer Kennzeichnung zu zumindest einem der Bereiche, um den Typ eines Bereichs, Zeitinformationen und/oder einen Arbeitsparameter zu definieren, und
eine Kommunikationseinheit (14) zum Übertragen der Darstellung an die autonome Vorrichtung (3),
**dadurch gekennzeichnet, dass**
das Darstellungserzeugungssystem (2), um die Karte zu erzeugen, eine Einrichtung zum Erhalten von Informationen über die Arbeitsumgebung aufweist, wobei die Einrichtung zum Erhalten von Informationen über die Arbeitsumgebung eine Augmented-Reality-Vorrichtung enthält, um die Darstellung, unter Verwendung eines halbtransparenten Musters auf einem Bildschirm der Augmented-Reality-Vorrichtung, in einer dem Bild der Arbeitsumgebung, wie sie von einem Menschen wahrgenommen und von einer Kamera der Augmented-Reality-Vorrichtung erfasst und auf dem Bildschirm der Augmented-Reality-Vorrichtung angezeigt wird, in überlagerter Form anzuzeigen, und
dass die Kartenverarbeitungseinheit (11) so ausgebildet ist, dass sie, um den zumindest einen Bereich in der Karte zu definieren, auf der erzeugten Karte einen automatisierten Segmentierungsprozess ausführt und öffentlich verfügbare Daten oder öffentlich verfügbare Grundbuchdaten aufweisende Kartendaten verwendet.

12. System zum Trainieren einer autonomen Vorrichtung nach Anspruch 11,
**dadurch gekennzeichnet, dass**
das Darstellungserzeugungssystem (2) eine Eingabe-/Ausgabevorrichtung (12) aufweist, zur Ausgabe der Karte und/oder einer Zwischendarstellung, und zum Erhalt einer manuellen Eingabe, wobei die Eingabe-/Ausgabevorrichtung (12) zumindest mit der Kartenverarbeitungseinheit (11) verbunden ist.

13. System zum Trainieren einer autonomen Vorrichtung nach einem der Ansprüche 11 bis 12,
**dadurch gekennzeichnet, dass**
die Kartenverarbeitungseinheit (11) so ausgebildet ist, dass sie auf der Grundlage des erhaltenen menschlichen Feedbacks Bereiche anpasst, löscht und/oder erzeugt.

14. System zum Trainieren einer autonomen Vorrichtung nach einem der Ansprüche 11 bis 13,
**dadurch gekennzeichnet, dass**
die Kartenverarbeitungseinheit (11) so ausgebildet ist, dass sie zugehörige Kennzeichnungen anpasst und/oder löscht und/oder neue Kennzeichnungen auf der Grundlage des erhaltenen menschlichen Feedbacks erzeugt.

15. System zum Trainieren einer autonomen Vorrichtung nach einem der Ansprüche 11 bis 14,
**dadurch gekennzeichnet, dass**
die Darstellungserzeugungseinheit (13) so ausgebildet ist, dass sie eine Zwischendarstellung erzeugt und diese Zwischendarstellung an die Eingabe-/Ausgabevorrichtung (12) weiterleitet.

16. System zum Trainieren einer autonomen Vorrichtung nach einem der Ansprüche 11 bis 15,
**dadurch gekennzeichnet, dass**
die Kartenverarbeitungseinheit (11) so ausgebildet ist, dass sie eine neue Karte mit bestehenden Bereichen und deren Kennzeichnungen kombiniert.

17. System zum Trainieren einer autonomen Vorrichtung nach einem der Ansprüche 11 bis 16,
**dadurch gekennzeichnet, dass**
die autonome Vorrichtung (3) einen autonomen Rasenmäher, einen Staubsauger, einen Industrieroboter, einen Schweißroboter, eine Drohne oder ein autonomes Fahrzeug darstellt.

18. System zum Trainieren einer autonomen Vorrichtung nach einem der Ansprüche 11 bis 17,
**dadurch gekennzeichnet, dass**
das Darstellungserzeugungssystem (2) eine tragbare Augmented-Reality-Vorrichtung, ein Smartphone (15) oder einen Tablet-Computer aufweist.

## Revendications

1. Procédé pour générer une représentation sur la base de laquelle un dispositif autonome (3) fonctionne dans son environnement de travail, le procédé étant exécuté dans un système de génération de représentation (2) comportant un dispositif de cartographie (10), une unité de traitement de cartes (11), et une unité de génération de représentation (13), dans lequel le système de génération de représentation (2) est séparé du dispositif autonome (3), le procédé comprenant les étapes suivantes :
générer une carte (S1) de l'environnement de travail du dispositif autonome (3) par le dispositif de cartographie (10) ;
définir au moins une zone (S2) sur la carte et associer au moins une étiquette (S3) à chaque zone pour définir le type de la zone, des informations temporelles et/ou un paramètre de travail par l'unité de traitement de cartes (11) ;
générer une représentation (S4) de l'environnement de travail sur la base de l'au moins une zone et de son (ses) étiquette(s) associée(s) par l'unité de génération de représentation (13) ; et
transmettre la représentation (S7) au dispositif autonome (3),
**caractérisé en ce que**
le système de génération de représentation (2) comprend des moyens pour obtenir des informations sur l'environnement de travail pour générer la carte, dans lequel les moyens pour obtenir des informations sur l'environnement de travail comportent au moins un dispositif de réalité augmentée pour afficher la représentation à l'aide d'un motif semi-transparent sur un écran du dispositif de réalité augmentée en superposition à une image de l'environnement de travail telle qu'elle est perçue par un humain capturée par une caméra du dispositif de réalité augmentée et affichée sur l'écran du dispositif de réalité augmentée, et le procédé comprenant en outre une étape consistant à
mener, par l'unité de traitement de cartes (11), un processus de segmentation automatisé sur la carte générée pour définir l'au moins une zone sur la carte et utiliser des données cartographiques qui comprennent des données accessibles au public ou des données de cadastre accessibles au public.

2. Procédé selon la revendication 1,
**caractérisé en ce que**
l'unité de traitement de cartes (11) reçoit une entrée humaine (S6) pour définir et/ou adapter une zone.

3. Procédé selon la revendication 1 ou 2,
**caractérisé en ce que**
une entrée reçue (S6) par l'unité de traitement de cartes (11) indique un type de zone, et l'unité de traitement de cartes (11) associe une étiquette correspondant au type à la zone respective.

4. Procédé selon l'une quelconque des revendications 1 à 3,
**caractérisé en ce que**
les étiquettes correspondent au moins aux types de zones suivants : une "zone de travail collaboratif', une "zone de travail de robots", une "zone de travail réservée à l'homme", une "zone de commande de robots", une "zone d'interdiction d'accès aux robots", une "zone d'eau", une "zone d'herbe", une "zone d'allée piétonne", une "zone pavée", une "zone de cour avant", une "zone de cour arrière", une " zone de cour de ferme", une "zone de loisirs", des informations temporelles et/ou un paramètre de travail.

5. Procédé selon l'une quelconque des revendications 1 à 4,
**caractérisé en ce que**
des zones sont divisées (S2) en sous-zones, dans lequel différentes sous-zones d'une zone commune sont étiquetées différemment.

6. Procédé selon l'une quelconque des revendications 1 à 5,
**caractérisé en ce que**
pour générer la représentation, une représentation intermédiaire est visualisée (S5) par au moins un humain et une rétroaction est reçue (S6) et utilisée pour adapter, supprimer et/ou générer une (des) étiquette(s).

7. Procédé selon l'une quelconque des revendications 1 à 6,
**caractérisé en ce que**
pour générer la représentation, une représentation intermédiaire est visualisée (S5) par au moins un humain et une rétroaction est reçue et utilisée pour adapter, supprimer et/ou générer une (des) zone(s) de la représentation intermédiaire.

8. Procédé selon l'une quelconque des revendications 1 à 7,
**caractérisé en ce que**
une représentation mise à jour est générée sur la base d'une carte récemment générée tout en conservant les étiquettes de zones, ou sur la base de zones adaptées tout en conservant les zones.

9. Procédé selon l'une quelconque des revendications 1 à 8,
**caractérisé en ce que**
au moins une étiquette associée à au moins une zone est activée ou désactivée lorsqu'un événement prédéterminé se produit.

10. Procédé selon l'une quelconque des revendications 1 à 9,
**caractérisé en ce que**
des zones et/ou des sous-zones sont représentées sur la base de points de polygone, de mailles, de grilles, de voxels, de mailles triangulaires, de positions GPS, de données cartographiques, de modèles appris ou entraînés, ou de réseaux neuronaux.

11. Système d'enseignement d'un dispositif autonome comprenant
un dispositif autonome (3) et un système de génération de représentation (2) pour générer une représentation d'un environnement de travail du dispositif autonome (3),
le système de génération de représentation (2) comprenant
un dispositif de cartographie (10) pour générer une carte de l'environnement de travail,
une unité de traitement de cartes (11) pour définir au moins une zone sur la carte et pour associer au moins une étiquette à au moins une des zones pour définir un type de zone, des informations temporelles et/ou un paramètre de travail, et
une unité de communication (14) pour transmettre la représentation au dispositif autonome (3), et
**caractérisé en ce**
**que** le système de génération de représentation (2) comprend des moyens pour obtenir des informations sur l'environnement de travail pour générer la carte, dans lequel les moyens pour obtenir des informations sur l'environnement de travail comportent un dispositif de réalité augmentée pour afficher la représentation à l'aide d'un motif semi-transparent sur un écran du dispositif de réalité augmentée en superposition à une image de l'environnement de travail telle qu'elle est perçue par un humain capturée par une caméra du dispositif de réalité augmentée et affichée sur l'écran du dispositif de réalité augmentée, et
**que** l'unité de traitement de cartes (11) est configurée pour mener un processus de segmentation automatisé sur la carte générée pour définir l'au moins une zone sur la carte et utiliser des données cartographiques qui comprennent des données accessibles au public ou des données de cadastre accessibles au public.

12. Système d'enseignement d'un dispositif autonome selon la revendication 11, **caractérisé en ce que**
le système de génération de représentation (2) comprend un dispositif d'entrée/de sortie (12) pour délivrer la carte et/ou une représentation intermédiaire et pour recevoir une entrée humaine, dans lequel le dispositif d'entrée/de sortie (12) est connecté au moins à l'unité de traitement de cartes (11).

13. Système d'enseignement d'un dispositif autonome selon l'une quelconque des revendications 11 à 12,
**caractérisé en ce que**
l'unité de traitement de cartes (11) est configurée pour adapter, supprimer et/ou générer des zones sur la base d'une rétroaction humaine reçue.

14. Système d'enseignement d'un dispositif autonome selon l'une quelconque des revendications 11 à 13,
**caractérisé en ce que**
l'unité de traitement de cartes (11) est configurée pour adapter et/ou supprimer des étiquettes associées et/ou générer de nouvelles étiquettes sur la base d'une rétroaction humaine reçue.

15. Système d'enseignement d'un dispositif autonome selon l'une quelconque des revendications 11 à 14,
**caractérisé en ce que**
l'unité de génération de représentation (13) est configurée pour générer une représentation intermédiaire et transférer cette représentation intermédiaire au dispositif d'entrée/de sortie (12).

16. Système d'enseignement d'un dispositif autonome selon l'une quelconque des revendications 11 à 15,
**caractérisé en ce que**
l'unité de traitement de cartes (11) est configurée pour combiner une nouvelle carte à des zones existantes et leurs étiquettes.

17. Système d'enseignement d'un dispositif autonome selon l'une quelconque des revendications 11 à 16,
**caractérisé en ce que**
le dispositif autonome (3) est une tondeuse à gazon autonome, un aspirateur, un robot industriel, un robot de soudage, un drone ou un véhicule autonome.

18. Système d'enseignement d'un dispositif autonome selon l'une quelconque des revendications 11 à 17,
**caractérisé en ce que**
le système de génération de représentation (2) comprend un dispositif portable de réalité augmentée, un téléphone intelligent (15) ou une tablette électronique.
